# EUROPEAN PATENT SPECIFICATION

(11) **EP 0 710 305 B1**
(45) Date of publication and mention of the grant of the patent: **29.04.1998**
(21) Application number: 94924790.2
(22) Date of filing: 19.07.1994
(51) Int. Cl.: D06N 7/00, C08L 53/02, C08L 91/00

(54) **CARPET BACKING DERIVED FROM BLOCK COPOLYMER COMPOSITIONS**
TEPPICHRÜCKENBESCHICHTUNG AUS BLOCKCOPOLYMERZUSAMMENSETZUNGEN
SUPPORT POUR TAPIS DERIVE DE COMPOSITIONS DE COPOLYMERES SEQUENCES

(30) Priority: 23.07.1993 EP 93202191; 29.03.1994 EP 94200850
(43) Date of publication of application: 08.05.1996
(73) Proprietor: SHELL INTERNATIONALE RESEARCH MAATSCHAPPIJ B.V., 2596 HR Den Haag (NL)
(72) Inventor: GRAAFLAND, Teunis, B-1348 Ottignies Louvain-la-Neuve (BE); BREUER, Olaf, Kurt, B-1348 Ottignies Louvain-la-Neuve (BE); MIGCHELS, Peter, B-1348 Ottignies Louvain-la-Neuve (BE)
(86) International application number: EP9402397
(87) International publication number: WO9503447

(56) References cited:
- EP-A- 0 046 536
- EP-A- 0 100 066
- EP-A- 0 243 956
- EP-A- 0 541 174
- WO-A-85/05116
- DE-A- 2 013 826
- FR-A- 2 078 707
- US-A- 4 234 636
- US-A- 4 695 493
- US-A- 4 844 765
- DATABASE WPI Week 8209, Derwent Publications Ltd., London, GB; AN 82-16434E (09) & JP,A,57 011 279 (TOKYO INK KK) 20 January 1982

## Description

The invention is relating to carpet backings based on block copolymers derived from a vinyl aromatic and a conjugated diene and more in particular styrene and butadiene and/or isoprene respectively.

More in particular the invention is relating to a carpet backing for polypropylene, polyester or polyamide carpets.

Up to now, backings of polypropylene, polyester or polyamide carpets are mainly obtained by applying either a carboxylated copolymer of styrene and butadiene as a latex, optionally mixed with a foaming agent, and a vulcanizing agent on the backside of a carpet, followed by a laborious and expensive drying and vulcanisation step, or by applying a plastisol of PVC on the carpet back.

Such initial carpets can usually be obtained by tufting polypropylene, polyester or polyamide yarns through a fabric of the same or anyhow a compatible starting material. The function of the backing is anchoring of the tufted yarns.

In addition it is generally known that conventional carpet backing processes may require the use of primers to adhere the backings or other methods to improve adhesion, such as corona discharge treatment or flame treatment.

For example the Japanese patent application No. 02255739 disclosed a continuous sheet-like crosslinked foam consisting of a resin mixture composition, which contained 10-55 wt% of a block copolymer, of which the two terminal blocks were consisting of styrene polymer and the middle block was consisting of ethylenebutylene copolymer or ethylene propylene copolymer, 40-85 wt% of polypropylene based resin and 5-40 wt% of polyethylene based resin, which could be stuck with a separate adhesive or bonding agent to a plastic film or sheet, onto another foam or onto various surface skin materials such as a metal foil, paper, non-woven cloths of natural fibres or synthetic fibres, vinyl leather and the like. In order to form a composite material, which might be used inter alia as buffering material for lining or backing domestic products such as carpets. However, it could clearly be derived from said application that in order to reach sufficient adhesion between the continuous sheet-like crosslinked foam and a surface skin to which it is stuck, the surface of the continuous sheet-like crosslinked foam should be subjected to a corona discharge treatment or flame treatment.

It will be appreciated that as well the foaming of the starting composition of block copolymer, polypropylene and polyethylene as the subsequent sticking of the foamed sheet to a surface of another layer represented additional process steps and costs.

Recent pressures from governmental and environmental agencies have placed strong emphasis on the need for many plastic articles to be prepared from completely recyclable components. The recycling operation generally involves heating and melting the usual waste polymer articles, to temperatures in excess of the melting point of each of the components therein. The resultant molten plastic mass is then used to form a new structure or article using conventional extrusion moulding etc. operations. The temperatures encountered in the recycling operations cause even the small or residual quantities of backing composition to char and/or discolour upon prolonged heating to above 175 °C or for shorter durations of temperatures of above about 200 °C, which are required for e.g. blow moulding of the reclaimed polymer, thereby visibly fouling or darkening the reclaimed plastic.

Such operations are not possible with carpet backing up to now used.

It will be appreciated, that the backing polymer composition of said carpets must be sufficiently compatible with said carpet fabric polymers to provide acceptable physical properties of the reclaimed polymer blend in the articles to be reused.

Therefore the primary object of the present invention is to provide such carpets, which have to be completely recyclable without any significant charge to environment and at costs as low as possible.

Another object of the present invention is to provide an economically attractive process to produce such carpets aimed at.

From U.S. patent No. 3,772,234 were known petroleum wax compositions comprising:
a) a petroleum wax predominating in paraffin wax, and
b) 7.5-30% by weight based on the composition of a block copolymer having at least one essentially completely hydrogenated polybutadiene block, the block prior to hydrogenation having a 1,2-content in the range from 13 to 45% and in particular in the ranges from 13 to 17% (column 1, lines 30-35) and from 25-31% (column 4, lines 33-39).

Although it was indicated that said petroleum wax compositions could in principle be used for paper or film coating or carpet backing, due to the formation of tight bond with paper or other fibrous products and metal foils or continuous webs such as glassine, it will be appreciated that the type of petroleum waxes used in the disclosed compositions are certainly not sufficiently compatible with polypropylene or polyester carpet fibres to enable an easy recycling by manufacturing novel articles from waste carpet mass by normal processing.

Moreover, the indicated viscosities of said compositions at 300 °F in centipoises were clearly regarded as too low for efficient carpet backing processing aimed at.

From the European patent application no. 0 046 563 there were actually known filled and plasticised blends of linear low density poly(ethylene-α-olefin) for use in the backside coating of a carpet to obtain sound deadening sheeting for automotive carpet. These compositions contained as main ingredient (a) ethylene/α-olefin copolymer and (b) plasticiser, selected from processing oils, epoxidised oils, polyesters and polyether esters and (c) a filler in a substantial amount and optionallv (d) an elastomeric polymer, in a specific mutual weight ratio range. However as taught in claim 2, preferably no elastomeric polymer should be present at all, whereas this elastomeric polymer, if any was to be used, could be selected from an extensive group of different types e.g. ethylene-propylene rubber, polyurethane, vulcanisable elastomers, such as styrenebutadiene rubber, ethylene/propylene/diene terpolymer (EPDM), chlorosulfonated polyethylene and styrene-butadiene-styrene triblock copolymers.

The European patent application no. 0541,174 actually disclosed to a person skilled in the art a block copolymer composition comprising:
(a) a block copolymer of vinyl aromatic and conjugated diene monomer,
(b) thermoplastic polymers selected from polyalkylenes, poly(vinyl aromatic), poly(phenylene ether), and mixtures thereof in an amount of from 5 to 500 parts by weight per 100 parts by weight of block copolymer,
(c) a plasticiser consisting of low molecular weight (poly(alkylene), having a Mw/Mn ratio in the range of from 1.0 to 3.0 and a number average molecular weight in the range of from 1100 to 6000, in an amount of from 5 to 200 parts by weight per 100 parts by weight of block copolymer, and
(d) fillers in an amount of from 0 to 500 parts by weight per 100 parts by weight of block copolymer, and
(e) additives, each in an amount of from 0 to 50 parts by weight per 100 parts by weight of block copolymer.

There compositions are found not to be influenced by heat ageing with reference to in particular the bleeding out of plasticiser, and could be applied therefore for more sophisticated areas such as in the medical area, in sporting goods, wire and cable enrobing, automotive, flooring and roofing compositions.

In particular in example 8 at page 7 of this publication (2), a composition is disclosed comprising 100 ptw hydrogenated triblock copolymer, 100 parts by specific low molecular, weight alkylene oligomer plasticiser (HYVIS 200), and 50 parts of polypropylene (PPSM 6100), and 20 ptw of resin (KR15TALEX F120) for which were shown retained physical properties after heat ageing due to the absence of plasticiser migration from the composition, according to teaching in said document.

It will be appreciated by a person skilled in the art that for the manufacture of said recyclable carpets, the carpet backing must meet a combination of several requirements:
a) the backing composition must be sufficiently compatible with all the other ingredients of the carpet,
b) the backing composition should have a melt viscosity low enough to allow a complete penetration into the tufts of the upper layer to obtain sufficient anchoring of said tufts at the chosen processing conditions. For loop pile tufted carpets the anchoring should be > 3 kg, while for cut pile the anchoring should be > 1 kg. Normal processing temperatures range from 150 ° to 200 °C,
c) the backing composition must provide a sufficient stoutness of the carpet back under using conditions,
d) the carpet backing composition may not become tacky under storage, transport or use conditions of the final carpet, and
e) it should be possible to add significant amounts of dispersed fillers and/or flame retarders to the carpet backing composition for economic reasons, such as calcium carbonate or silica, magnesium hydroxide or alluminium oxide trihydrate.

As a result of extensive research and experimentation, the recyclable carpet aimed at, have now been surprisingly found.

Accordingly the invention is relating to easily and fully recyclable carpets, comprising a thermoplastic carpet fabaric of poly(propylene), polyesters, or polyamide yarns and a block copolymer composition applied on the back side of the carpet fabric, said block copolymer composition comprising at least:
a) a block copolymer, containing at least two terminal poly(vinylaromatic) blocks and at least one internal poly(conjugated diene) block,
b) a non-aromatic plasticizing oil in an amount of from 30 to 250 parts by weight per 100 parts by weight of block copolymer,
c) a poly(vinylaromatic) block compatible resin selected from coumarone-indene resin, polyphenylene ether resin, poly(styrene) resin, poly(alfamethylstyrene) resin, vinyl toluene-alfa methylstyrene copolymer resin, poly(indene) resin, and poly(methyl indene)resin, in an amount of from 30 to 200 parts by weight per 100 parts by weight of block copolymer, and having a melt viscosity of <500 Pa.s at processing temperatures in the range of from 150 to 200°C.

The amount of said block copolymer composition applied on the carpet back according to the present invention is in the range from 100-1600 g/m² of carpet back surface and preferably in the range of from 200 to 1000 g/m².

The block copolymers which have been found to be suitably applied, preferably are linear triblock copolymers or multi-armed (more than 2 arms) radial or star shaped block copolymers, the blocks of which have been predominantly derived from styrene and butadiene and/or isoprene respectively. The poly(conjugated diene) blocks may optionally have been hydrogenated up to a substantial degree, i.e. more than 80% of the ethylenic unsaturation.

With the term "predominantly derived from" is meant that the main monomer of the respective individual blocks optionally may be mixed with minor amounts of another comonomer and more in particular with minor amounts of the main monomer of the other blocks.

Examples of the vinyl aromatic monomers may be selected from styrene, α-methylstyrene, p-methylstyrene, m-methylstyrene, o-methylstyrene, p-tert-butylstyrene, dimethylstyrene, vinylnaphthalene and the like and mixtures thereof and conjugated diene monomers may be selected from butadiene, isoprene, piperylene and the like, and mixtures thereof.

Of these monomers styrene and butadiene or isoprene or mixtures thereof are preferred. Most preferably block copolymers have been found to be used, which only contain substantially pure poly(styrene) blocks and substantially pure poly(butadiene) or poly(isoprene) blocks.

Examples of such block copolymers which can be suitably used are Cariflex, Kraton D and G block copolymers (Cariflex and Kraton are trade marks) and more preferably Cariflex KX 139, Cariflex TR-1102, Kraton G 1652, Kraton G 1726 block copolymers are used.

It will be appreciated that also mixtures of hydrogenated and non-hydrogenated or partially hydrogenated block copolymers can be used as starting ingredients for the block copolymer composition, in addition to individual grades of hydrogenated block copolymers or non-hydrogenated block copolymers or partially hydrogenated block copolymers.

It will be appreciated that the poly(conjugated diene) blocks of the block copolymers to be used for the compositions of the present invention, can be selectively hydrogenated and/or may be grafted with a polar entity, such as carboxylic acids or derivatives thereof, epoxy compounds, silane compounds, amines or amides.

Representative examples of block copolymers grafted with unsaturated acid derivatives are known from US patent No. 4,007,311, US patent No. 4,264,747 and European patent applications 0085115, 0173380, 0215501, 0301665.

Preferably the grafting of polar entities will be performed on the selectively hydrogenated poly(conjugated diene) blocks. More preferably unsaturated carboxylic acid or esters or anhydrides thereof, will be grafted to said hydrogenated poly(conjugated diene)blocks.

Preferred examples of such grafting agents are maleic anhydride, fumaric acid or esters thereof, itaconic acid or esters or anhydride thereof, acrylic acid or methacrylic acid or esters of these acids and preferably glycidyl acrylate. More preferably maleic anhydride or acrylic acid esters are used.

Examples of commercial block copolymers grafted with maleic acid anhydride are Kraton FG 1901 and FG 1921 X.

Mixtures of unmodified hydrogenated block copolymers and of modified hydrogenated block copolymers and preferably those block copolymers, the basic blocks of which are structurally related or more preferably similar, can also be used for the hot melt compositions to be used for the present invention. It will be appreciated that the use of functionalized, selectively hydrogenated block copolymers as constituent in the hot melt compositions to be used according to the present invention, only will be necessary with reference to the desired compatibility with polar thermoplastic polymers of the yarns applied for the starting carpet. In particular said modified hydrogenated block copolymer alone or mixed with non-modified block copolymers will primarily be used in case of polyamide carpets.

In addition, such individual block copolymer grades may themselves actually comprise blends of a predominant part by weight of triblock copolymer as hereinbefore defined and a minor part (≤20 %wt) of a diblock copolymer, which originated from the living precursor block copolymer before (partial) coupling and termination or may consist of triblock copolymers only.

The terminal blocks in the optionally selectively hydrogenated block copolymers have usually apparent molecular weights, ranging from 3,000 to 100,000 and preferably from 5,000 to 20,000, and the internal, optionally selectively hydrogenated poly(conjugated diene) blocks usually have apparent molecular weights in the range of from 10,000 to 300,000 and preferably from 30,000 to 100,000. The initially prepared poly(conjugated diene) blocks usually contain from 5 to 50 mol%, relative to the conjugated diene molecules, of vinyl groups originating from 1,2 polymerization and more preferably from 5 to 15% in case of use of non-hydrogenated block copolymers and from 25-40% in case of use substantially completely hydrogenated block copolymers.

The complete block copolymer to be used according to the present invention, is normally containing bound vinyl aromatic in an amount of from 20 to 60% by weight and preferably from 25 to 50% by weight. The apparent molecular weight of the total block copolymer will normally be in the range of from 20,000 to 350,000 and preferably in the range of from 40,000 to 200,000 and more preferably in the range from 40,000 to 150,000.

As component (b) various plasticizing oils are useful in the compositions to be used according to the present invention.

Plasticizing oils which have been found useful include petroleum derived oils, olefin oligomers and low molecular weight polymers, as well as vegetable and animal oil and their derivatives.

The petroleum derived oils which may be employed are relatively high boiling materials, containing only a minor proportion of aromatic hydrocarbons preferably less than 20 percent and more preferably less than 15 percent by weight of the oil most preferably the oil may be totally non-aromatic. The oligomers may be polypropylene, polybutenes, hydrogenated polyisoprene, hydrogenated polybutadiene, polypiperylene and copolymers of piperylene and isoprene, having average molecular weights between 350 and 10,000.

Vegetable and animal oils include glyceryl esters of the usual fatty acids and polymerization products thereof.

Examples of a preferred paraffinic oil are Primol 352 (Primol is a trade mark) Catenex SM 925, Catenex SM 956 (Catenex is a trade mark) and the Napvis and Hyvis (trade marks) polyolefins, having a molecular weight in the range of from 500 to 6,000.

As component (c) various terminal block compatible resins are useful in the compositions used according to the present invention.

Examples of the terminal poly(vinyl aromatic) block modifying resins include coumarone-indene resin, polyphenylene ethers and more particularly poly(2,6-dimethyl-1,4-phenylene ether), polystyrene resin, poly(alfa-methyl styrene) vinyltoluene-alphamethylstyrene copolymer resin, polyindene resin, or poly(methyl indene) resin.

Examples of such commercial resins are Hercures HM 100, Hercures A 120, Hercures A 100, Endex 160, Kristalex F 120, Kristalex F 5140, Nevchem NL 140 and Piccotex 120. (Hercures, Endex, Kristalex, Nevchem and Piccotex are trade marks.)

Preferred modifying resins are optionally substituted polystyrene resins.

The weight ratio of the components a), b) and c) of the starting hot melt composition to be used for the process of the present invention, is normally in the range of from 30 to 200 parts by weight and preferably from 80 to 170 parts by weight and more preferably from 120 to 170 parts by weight, of plasticizing oil per 100 parts by weight of block copolymer and from 30 to 150 parts by weight and preferably from 75 to 125 parts by weight of end block compatible resin per 100 parts by weight of block copolymer.

The block copolymer compositions as specified hereinbefore, can be applied on the carpet back either by several methods known in principle for application of a hot melt composition or by the application of the hereinbefore specified block copolymer composition in a finely powdered form, e.g. obtained by cryogenic milling, as specified in the copending European application No. 93203636.1 filed December 22, 1993, in a suitable layer and heating said layer by e.g. IR irradiation to achieve a continuous backing layer.

Said starting hot melt compositions have been found to provide an optimal melt viscosity of < 500 Pa.s at the usual processing temperatures in the range of from 150-200 °C, and more preferably in the range from 0.5 to 100 Pa.s in that temperature range. Moreover, they have appeared to give a hardness of the final backing layer of from 40 to 60 shore A, whereas the amount of hot melt aimed at to be applied on the carpet back for economically attractive carpet manufacturing of the hereinbefore specified type of from 100 to 1600 g/m² and preferably from 200 to 1000 g/m² could be reached.

It will be appreciated that the hot melt composition may optionally contain, in addition to the three before-mentioned main components one or more auxiliary agents such as stabilizers, fillers, colouring agents and slip agents.

The stabilizers or antioxidants optionally used in accordance with the practice of the present invention include high molecular weight hindered phenols and multifunctional phenols such as sulphur and/or phosphorus containing phenols. Hindered phenols are well known to those skilled in the art and may be characterized as phenolic compounds, which also contain sterically bulky radicals in close proximity to the phenolic hydroxyl group thereof. In particular tertiary butyl groups or amyl groups generally are substituted onto the benzene ring in at least one of the ortho positions relative to the phenolic hydroxy group.

Representatives of such stabilizers are commercially available under the trade marks Sumilizer and Irganox, e.g. Sumilizer GM and GS, Irganox 1010.

As additional auxiliaries, inorganic and organic fillers can be used, which are well known in the art. Examples of such fillers include calcium carbonate, aluminium silicate, clay, talc, titanium dioxide, bentonites, kaolin, barytes, mica, silica, barium sulfate or mixtures thereof. A preferred filler is calcium carbonate. The fillers can be incorporated in amounts up to 400 parts by weight per 100 parts by weight of block copolymer and preferably from 150-250 parts and which has a particle size of ≥ 1 µ and more preferably in the range from 5-50 µ.

Examples of commercial fillers of that type are Durcal 5 and Millicarb (both are trade marks).

It will be appreciated as surprising by a person skilled in the art, that when applying a hot melt on a carpet fabric according to the present invention by one step processing techniques, such as hot melt coating extrusion-coating or powder coating carpet backings could be obtained, showing very good anchoring of the e.g. polypropylene tufts. Depending on the backing weight, a tuft anchoring of 3-8 kg is obtainable. Moreover, the bonding of the backing layer to the upper layer and the optional secondary backing may be more than 3 N/5 cm, as determined by a 180° T-peel strength test.

On the other hand the carpet backings obtainable according to the present invention appeared to show an attractive flexibility in combination with an attractive stoutness of the total carpet. It is preferred that backing layer has a total thickness in the range of from 0.1 to 5 mm and preferably from 0.2 to 0.5 mm.

For some of the use purposes of the recyclable carpets e.g. automotive carpets to be produced according to the present invention, the hot melt composition or powdered composition can be straightly applied on the carpet fabric in one step.

For carpet embodiments requiring higher wear resistance like e.g. domestic tufted carpets or institutional carpets, the application of a precoat composition, based on said starting hot melt composition having a melt viscosity of < 20 Pa.s at processing temperatures in the range of from 150-120 °C and more preferably having a melt viscosity in the range from 0.5 to 15 Pa.s in that temperature range, on the fabric as a first step, followed by application of a second layer of a hot melt block copolymer composition, showing a relatively higher melt viscosity as second step, is preferred.

For carpet embodiments requiring higher wear resistance, most preferably a precoating layer of the block copolymer composition is applied as hot melt by extrusion coating and a subsequent layer is applied in the form of a fine powder, which layer is subsequently fused into a continuous layer by heat treatment.

The amount of precoat composition to be applied on the carpet back can vary from 100 to 1600 g/m² and preferably from 100 to 500 g/m². Carpet backings thus obtained show a very good tuft anchoring together with good filament binding resulting in good wear-out properties.

It will be appreciated that according to a further alternative embodiment of the present invention an additional secondary backing or web, composed of polypropylene or jute, can be applied for special purposes. This web can be conveniently applied in the same coating step(s) as the backing itself.

It will be appreciated that the outside of the applied hot melt composition layer of the carpet after cooling can, if desired, be additionally coated with a relatively thin layer, providing an anti-slip and/or an adhesive thin coating to fix and keep the carpet in its exact position e.g. by applying a usual adhesive coating.

The application of the block copolymer composition can be carried out by means of a variety of usual application techniques. Preferably a hot melt extrusion coating or powder coating process will be used and more preferably in combination with a subsequent roll take off equipment to compress sheet and carpet fabric.

It will be appreciated that another aspect of the invention is formed by easily and fully recyclable carpets, having a back layer derived from the hereinbefore specified block copolymer compositions, showing a hardness of from 40 to 60 shore A, containing an amount of hot melt composition in the range from 100 to 1600 g/m² and having a thickness of from 0.1 to 5 mm and preferably from 0.2 to 0.5 mm, and having a basic carpet fabric derived from polypropylene or polyamide or polyester yarns.

Another aspect of the invention is formed by the block copolymer compositions to be used for carpet backing and providing a fully recyclable carpet, which moreover shows an attractive combination of properties and which can be obtained with relatively low manufacturing costs due to the rather simple backing technique.

Accordingly the invention is also relating to block copolymer compositions for backing of easily and fully recyclable carpets, comprising:
a) 100 parts by weight of a block copolymer containing at least two terminal poly(vinylaromatic) blocks and at least one internal poly(conjugated diene) block,
b) 30 to 180 parts by weight of a non-aromatic plasticizing oil,
c) 50 to 160 parts by weight of a poly(vinylaromatic) block compatible resin, selected from coumarone-indene resin, poly(phenylene ether) resin, poly(styrene) resins, poly(alfamethylstyrene) resin, vinyl toluene-alfa methylstyrene copolymer resin, poly(indene) resin, and poly(methyl indene)resin.

More preferably said block copolymer compositions comprise modified block copolymers obtainable by grafting with unsaturated carboxylic acids, or esters or anhydrides thereof on the poly(conjugated diene) blocks.

More preferably said block copolymers compositions comprise block copolymers, having poly(vinyl aromatic) blocks which have been derived from pure styrene and have apparent molecular weights in the rnage of from 5,000 to 20,000,and internal poly(conjugated diene) blocks having been derived from pure butadiene or isoprene and having apparent molecular weights in the range of from 30,000 to 100,000.

Optionally an inorganic filler and more preferably calcium carbonate may be included up to an amount of 500 parts by weight.

Such block copolymer compositions may be prepared according to methods known per se, such as high shear mixing or mixing under heating until the desired melt viscosity is reached.

A further aspect of the present invention is formed by the fluffy shredded recyclable carpets, which can be reprocessed into useful products by means of compacting and subsequent extrusion.

The invention will be further illustrated by the following examples, however without restricting its scope to these embodiments.

### Example 1

A hot melt composition (1) prepared by high shear mixing in an extruder and containing 70 parts by weight Kraton G 1652 and 30 parts by weight Cariflex KX139, (a commercial available styrenebutadiene block copolymer, having Mw 92.000 and styrene content 40% and melt flow rate at 200 °C/5 kg of 20 g/min (ISO 1.133)), 140 parts by weight of Catenex SM 925, (commercial available paraffinic/naphthenic oil (64/34) density 15 °C 867 kg/m³, pour point -15 °C), 80 parts by weight of Kristalex F-120, (commercial available low mol. weight thermoplastic hydrocarbon polymer derived largely from alpha-methylstyrene, 118 °C softening point), 1 part by weight Kemamide E (Kemamide is a trade mark for a commercially available ecrucamide (slip agent), mol. weight 335, density 130 ° g/ml: 0.875) and 1 part by weight of Irganox 1010, having melt viscosity of 30 Pa.s at 160 °C and of 13 Pa.s at 180 °C, was applied on the backside of a loop pile polypropylene carpet fabric, containing 2-10 piles/cm² and each pile consisting of about 100-140 filaments, by means of an extrusion coating process. The experiments were carried out on a carpet coating equipment, using several mill rolls.

The hot extruded sheet (melt temperature in the die was 170 °C) was directly applied on the carpet back side.

The bonding force between the backing composition and the PP fabric was determined by means of a T peel test.

The tuft anchoring was measured by means of pulling one tuft until release from the carpet backing.

The measured properties have been listed in the Table.

### Example 2

A hot melt composition (2), containing 100 parts by weight of Cariflex TR-1102, 114 parts by weight of Catenex SM 925, 80 parts by weight of Kristalex F-120, 200 parts by weight of Durcal 5 (a commercial calcium carbonate powder), 1 part by weight of Kemamide E and 1 part by weight of Irganox 1010, having a melt viscosity at 160 °C of 82 Pa.s and at 180 °C of 32.2, was applied in the same way as described in example 1 to the same PP carpet fabric back side. The measured properties have been listed in the Table.

### Example 3

A hot melt composition (3), containing 100 parts by weight of Cariflex KX 139, 100 parts by weight of Catenex SM 925, 50 parts by weight of Kristalex F-120, 200 parts by weight of Durcal 5, 1 part by weight of Kemamide E and 1 part by weight of Irganox 1010, having a melt viscosity at 160 °C of 95.2 Pa.s and at 180 °C of 30 Pa.s, was applied in the same way as described in example 1 to the same PP carpet fabric back side.

The measured properties have been listed in the Table.

### Example 4

A hot melt composition (4), containing 100 parts of Kraton G 1652, 140 parts by weight of Primol 352 (a commercially available paraffinic oil; density at 15 °C: 685 kg/m³; pouring point -18 °C), 100 parts by weight of Kristalex F-120, 200 parts by weight of Durcal 5, 1 part by weight of Kemamide E and 1 part by weight of Irganox 1010, having a melt viscosity at 160 °C of 156 Pa.s and at 180 °C of 39 Pa.s was applied in the same way as described in example 1 to the same PP carpet fabric back side.

The measured properties have been listed in the Table.

### Example 5

The hot melt composition (1), as specified in example 1, was applied on a back-side of a polyamide PET carpet fabric, containing from 10-20 piles/cm² and each pile comprising from 100 to 140 filaments by means of an extrusion coating process. The experiments were carried out as specified in example 1.

The measured properties have been listed in the Table.

### Example 6

A hot melt composition containing 100 parts of Cariflex TR KX 139, 30 parts by weight of Catenex SM 956, 100 parts by weight of Hercures A 100, 1 part by weight of Kemamide E and 1 part by weight of Irganox 1010, having a melt viscosity at 180 °C of 13 Pa.s, was applied in the same way as described in example 1 to the same PP carpet fabric back side.

On top of this precoat a hot melt composition (4) in powdered form with an average particle size of 350 µm was applied in a powder coating equipment.

A tuft anchoring of > 3 kg and a good binding of the filaments was obtained.

### Example 7

A hot melt composition containing 100 parts of Kraton G 1726, 100 parts by weight of Hercures A 120, 140 parts by weight of Catenex SM 925, 50 parts of Durcal 5, 1 part Kemamide E and 1 part Irganox 1010, having a melt viscosity at 180 °C of 0.7 Pa.s, was applied in the same way as described in example 1 to the same PP carpet fabric back side. On top of this precoat a hot melt composition (2) in powdered form with an average particle size of 500 µm was applied in a powder coating equipment.

Excellent tuft anchoring, filament binding and delaminating force (ASTM D3936) of the textile backing were obtained.

### Example 8

50 Parts KRG 1726, 50 parts KRG 1652, 150 parts Hercures A 120, 175 parts Catenex SM 925, 50 parts Durcal 5, 1 part Kemamide E, 1 part Irganox 1010, having a melt viscosity at 160 °C of about 1 Pa.s, was applied in the same way as describred in example 1 to the same PP carpet.

On top of this precoat a composition (2) in powder form with an average particle size of 500 µm was applied in a powder coating equipment.

Excellent tuft achoring (ASTM D1335), filament binding (measured by Lisson test (DIN 54322), Drum test (DIN 54323), and chair castor test (DIN 54324)), and delaminating force (ASTM D3936) were measured.

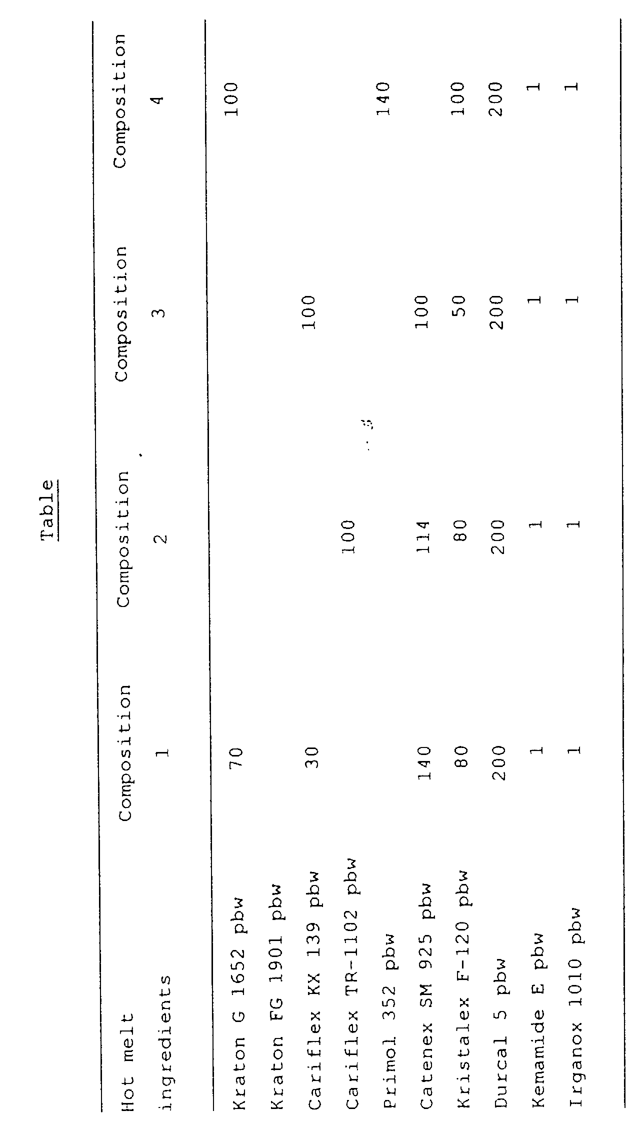

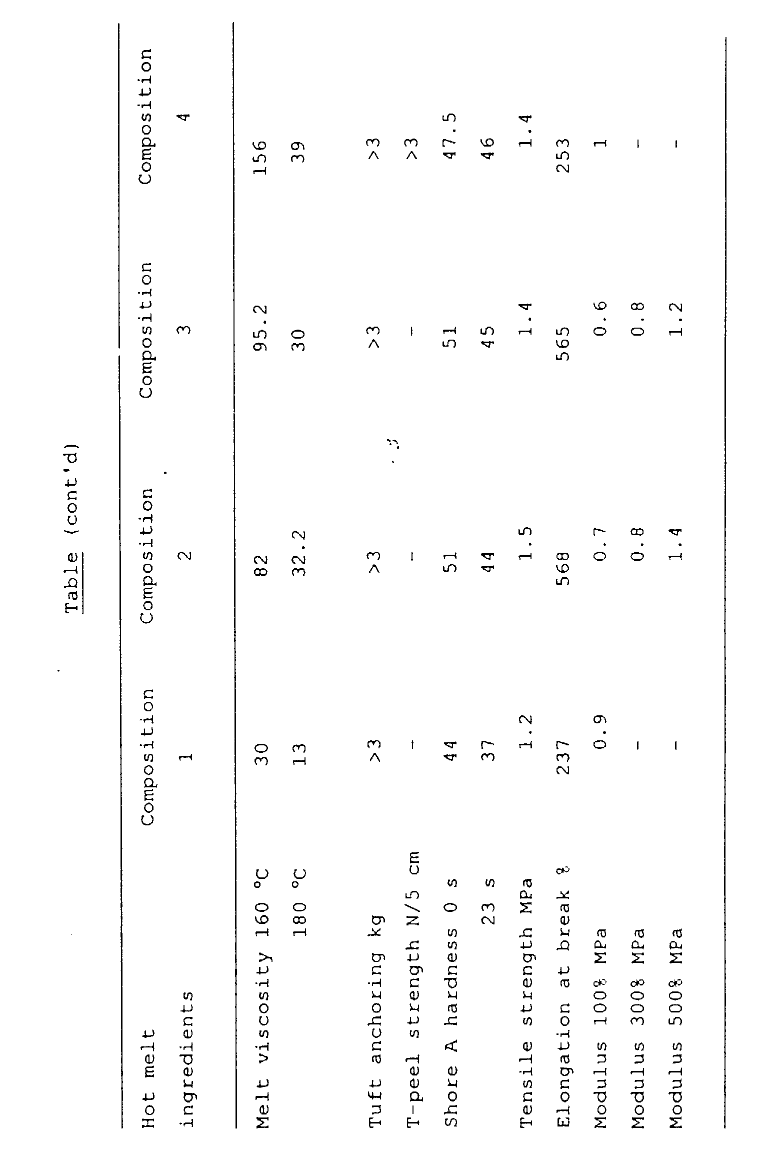

In the subsequent table the physical properties are listed of a blend of recycled carpet of polypropylene fabric, backed with a Kraton G block copolymer containing composition according to the invention, obtained by shredding and compacting the carpet, and mixing the obtained particles with virgin PP homopolymer. For comparison the physical properties of a PP homopolymer, a PE copolymer and the pure recycled carpet are listed.

| | virgin PP homopol. 1 | PP homopol. + recycl. carpet 2* | virgin copol. (EP) 3 | recycled carpet 4* |
|---|---|---|---|---|
| Ingredient | | | | |
| SS 6500^{x} | 100 | 70 | - | 100 |
| Carpet | - | 30 | - | |
| SMA 6100K (copol)^{v} | - | - | 100 | - |
| | | | | |
| Flex Modulus MPa | 1179 | 914 | 1004 | 390 |
| Izod Impact Strength | | | | |
| at 23 °C kJ/m² | 3.1 | 5.0 | 6.0 | 8.5 |
| at 0 °C | 2.1 | 3.3 | 4.4 | 5.8 |
| at -23 °C | 1.9 | 2.3 | 3.7 | 5.0 |
| MFR, 230 °C/2.16 kg | | | | |
| g/10 min | 12 | 17 | 11 | 33** |

| | | | | |
|---|---|---|---|---|
| * Containing ca. 5% wt G-1652 | | | | |
| ** Measured at 190 °C/2.16 kg | | | | |
| x a commercially available polypropylene homopolymer, mol. weight 260.000 to 280.000; melt index = 12 | | | | |
| v a commercially available polypropylene copolymer (15% PE content) melt index = 11 | | | | |

From the preceding table, it will be appreciated that the recycled carpet after shredding and compacting may be easily blended with virgin PP homopolymer to provide properties of the blend of a quality of (filled) toughened PP.

## Claims

1. Easily and fully recyclable carpets comprising a thermoplastic carpet fabric of poly(propylene), polyester, or polyamide yarns and a block copolymer composition, applied on the back-side of the carpet fabric, said block copolymer composition comprising at least:
a) a block copolymer, containing at least two terminal poly(vinylaromatic) blocks and at least one internal poly(conjugated diene) block,
b) a non-aromatic plasticizing oil in an amount of from 30 to 250 parts by weight per 100 parts by weight of block copolymer,
c) a poly(vinylaromatic) block compatible resin, selected from coumarone-indene resin, polyphenylene ether resin, poly(styrene) resins, poly(alfamethylstyrene) resin, vinyl toluene-alfa methylstyrene copolymer resin, poly(indene) resin, and poly(methyl indene)resin in an amount of from 30 to 200 parts by weight per 100 parts by weight of block copolymer,
and having a melt viscosity of <500 Pa.s at processing temperatures in the range of from 150 to 200°C.

2. Recyclable carpets according to claim 1, characterised in that the original ethylenical unsaturation in the poly(conjugated diene) blocks has been selectively hydrogenated.

3. Recyclable carpets according to claim 1, characterised in that a block copolymer composition has been applied on the carpet back-side in an amount of from 100-1600 g/m².

4. Recyclable carpets according to claim 3, characterised in that the block copolymer composition is applied on the carpet back-side in an amount from 200 to 1000 g/m².

5. Recyclable carpets according to claims 1-4, characterized in that as block copolymer ingredient (a) linear triblock copolymers or multi-armed radial or star shaped block copolymers are used, the blocks of which have been predominantly derived from pure styrene and pure butadiene and/or isoprene respectively.

6. Recyclable carpets according to claims 1-5 characterised in that the block copolymer ingredient (a) comprises selectively hydrogenated block copolymers obtainable by grafting unsaturated carboxylic acids or esters or anhydrides thereof on the poly(conjugated diene) blocks.

7. Recyclable carpets according to claims 1-6, characterized in that a paraffinic oil is used in the block copolymer composition.

8. Recyclable carpets according to claims 1-6, characterized in that olefin oligomers or low molecular weight olefin polymers are used in the block copolymer composition.

9. Recyclable carpets according to claims 1-8, characterized in that as component (c) a poly(alfa-methylstyrene) resin is used.

10. Recyclable carpets according to claims 1-9, characterized in that the weight ratio between the components a), b) and c) of the block copolymer composition is in the range of from 30 to 180 parts by weight of component b) per 100 parts by weight of block copolymer and from 50 to 160 parts by weight of component c) per 100 parts by weight of block copolymer.

11. Recyclable carpets according to claims 1-10, characterized in that they have been derived from hot melt compositions having a melt viscosity of from 0.5 to 100 Pa.s at processing temperatures in the range of from 150-200 °C.

12. Recyclable carpets according to claims 1-11, characterized in that they have been derived from a block copolymer composition in the form of a fine powder which after application is fused into a continuous layer by heat treatment.

13. Recyclable carpets according to claims 1-12, characterized in that calcium carbonate has been included as a filler in the applied block copolymer composition.

14. Recyclable carpets according to claims 1-13, characterized in that the back layer has a thickness of from 0.5 to 5 mm and a hardness of from 40 to 60 shore A.

15. Recyclable carpet according to claims 1-14, characterised in that it has been shredded.

16. Block copolymer composition to be used for backing of easily and fully recyclable carpets, comprising:
a) 100 parts by weight of a block copolymer containing at least two terminal poly(vinylaromatic) blocks and at least one internal poly(conjugated diene) block,
b) 30 to 180 parts by weight of a non-aromatic plasticizing oil,
c) 50 to 160 parts by weight of a poly(vinylaromatic) block compatible resin, selected from coumarone-indene resin, poly(phenylene ether) resin, poly(styrene) resin, poly(alfa-methylstyrene) resin, vinyl toluenealfamethylstyrene copolymer resin, poly(indene) resin and poly(methyl indene) resin.

17. Block copolymer compositions according to claim 6, characterised in that the original ethylenic unsaturation in the poly(conjugated diene) blocks has been selectively hydrogenated.

18. Block copolymer compositions according to claims 16 and 17, characterized in that they comprise modified block copolymers obtainable by grafting with unsaturated carboxylic acids, or esters or anhydrides thereof on the poly(conjugated diene) blocks.

19. Block copolymer compositions according to claims 16-18, characterized in that the poly(vinylaromatic) blocks of the block copolymers have been derived from pure styrene and have apparent molecular weights, in the range of from 5,000 to 20,000, and the internal poly(conjugated diene) blocks have been derived from pure butadiene or isoprene and have apparent molecular weights in the range of from from 30,000 to 100,000.

20. Block copolymer compositions according to claims 16-19, characterized in that the poly(conjugated diene) blocks contain from 5 to 50% of vinyl groups, relative to the conjugated diene molecules.

21. Block copolymer compositions according to claims 16-20, characterized in that the complete block copolymers are containing bound vinyl aromatic compound in an amount of from 20 to 60% by weight.

## Patentansprüche

1. Leicht und vollständig rezyklierbare Teppiche, umfassend ein thermoplastisches Teppichgewebe aus Poly(propylen)-, Polyester- oder Polyamidgarnen und eine auf die Rückseite des Teppichgewebes aufgetragene Blockcopolymerzusammensetzung, wobei diese Blockcopolymerzusammensetzung zumindest umfaßt:
a) ein Blockcopolymer, das wenigstens zwei endständige Poly(vinylaromat)blöcke und wenigstens einen inneren Poly(konjugiertes Dien)block enthält,
b) ein nichtaromatisches Weichmacheröl in einer Menge von 30 bis 250 Gewichtsteilen je 100 Gewichtsteile Blockcopolymer,
c) ein mit dem Poly(vinylaromat)block verträgliches Harz, ausgewählt unter Cumaron-Inden-Harz, Polyphenylenetherharz, Poly(styrol)harz, Poly(alfamethylstyrol)harz, Vinyltoluol-alfa-Methylstyrol-Copolymerharz, Poly(inden)harz und Poly(methylinden)harz, in einer Menge von 30 bis 200 Gewichtsteilen je 100 Gewichtsteile Blockcopolymer, wobei die Blockcopolymerzusammensetzung eine Schmelzviskosität von <500 Pa.s bei Verarbeitungstemperaturen im Bereich von 150 bis 200°C aufweist.

2. Rezyklierbare Teppiche nach Anspruch 1, dadurch gekennzeichnet, daß die ursprüngliche ethylenische Unsättigung in den Poly(konjugiertes Dien)blöcken selektiv hydriert worden ist.

3. Rezyklierbare Teppiche nach Anspruch 1, dadurch gekennzeichnet, daß eine Blockcopolymerzusammensetzung in einer Menge von 100 bis 1.600 g/m² auf die Teppichrückseite aufgetragen worden ist.

4. Rezyklierbare Teppiche nach Anspruch 3, dadurch gekennzeichnet, daß die Blockcopolymerzusammensetzung in einer Menge von 200 bis 1.000 g/m² auf die Teppichrückseite aufgebracht worden ist.

5. Rezyklierbare Teppiche nach den Ansprüchen 1 bis 4, dadurch gekennzeichnet, daß als Blockcopolymerkomponente (a) lineare Dreiblockcopolymere oder mehrarmige radiale oder sternförmige Blockcopolymere verwendet werden, deren Blöcke überwiegend von reinem Styrol bzw. reinem Butadien und/oder Isopren abgeleitet worden sind.

6. Rezyklierbare Teppiche nach den Ansprüchen 1 bis 5, dadurch gekennzeichnet, daß die Blockcopolymerkomponente (a) selektiv hydrierte Blockcopolymere umfaßt, die durch Aufpfropfen von ungesättigten Carbonsäuren oder Estern oder Anhydriden hievon auf die Poly(konjugiertes Dien)blöcke erhältlich sind.

7. Rezyklierbare Teppiche nach den Ansprüchen 1 bis 6, dadurch gekennzeichnet, daß in der Blockcopolymerzusammensetzung ein paraffinisches Öl verwendet wird.

8. Rezyklierbare Teppiche nach den Ansprüchen 1 bis 6, dadurch gekennzeichnet, daß in der Blockcopolymerzusammensetzung Olefinoligomere oder niedermolekulare Olefinpolymere verwendet werden.

9. Rezyklierbare Teppiche nach den Ansprüchen 1 bis 8, dadurch gekennzeichnet, daß als Komponente (c) ein Poly(alfamethylstyrol)harz verwendet wird.

10. Rezyklierbare Teppiche nach den Ansprüchen 1 bis 9, dadurch gekennzeichnet, daß das Gewichtsverhältnis zwischen den Komponenten a), b) und c) der Blockcopolymerzusammensetzung im Bereich von 30 bis 180 Gewichtsteilen Komponente b) je 100 Gewichtsteile Blockcopolymer und von 50 bis 160 Gewichtsteilen Komponente c) je 100 Gewichtsteile Blockcopolymer liegt.

11. Rezyklierbare Teppiche nach den Ansprüchen 1 bis 10, dadurch gekennzeichnet, daß sie von Heißschmelzzusammensetzungen mit einer Schmelzviskosität von 0,5 bis 100 Pa.s bei Verarbeitungstemperaturen im Bereich von 150 bis 200°C abgeleitet worden sind.

12. Rezyklierbare Teppiche nach den Ansprüchen 1 bis 11, dadurch gekennzeichnet, daß sie von ein Blockcopolymerzusammensetzung in der Form eines feinen Pulvers abgeleitet worden sind, das nach dem Aufbringen durch Wärmebehandlung zu einer kontinuierlichen Schicht geschmolzen wird.

13. Rezyklierbare Teppiche nach den Ansprüchen 1 bis 12, dadurch gekennzeichnet, daß Kalziumcarbonat als Füllstoff in die aufgebrachte Blockcopolymerzusammensetzung aufgenommen worden ist.

14. Rezyklierbare Teppiche nach den Ansprüchen 1 bis 13, dadurch gekennzeichnet, daß die Rückenschicht eine Stärke von 0,5 bis 5 mm und eine Härte von 40 bis 60 Shore A aufweist.

15. Rezyklierbarer Teppich nach den Ansprüchen 1 bis 14, dadurch gekennzeichnet, daß er zerkleinert worden ist.

16. Blockcopolymerzusammensetzung zum Rückenbeschichten von leicht und vollständig rezyklierbaren Teppichen, umfassend:
a) 100 Gewichtsteile eines Blockcopolymers, das wenigstens zwei endständige Poly(vinylaromat)blöcke und wenigstens einen inneren Poly(konjugiertes Dien)block enthält,
b) 30 bis 180 Gewichtsteile eines nichtaromatischen Weichmacheröls,
c) 50 bis 160 Gewichtsteile eines mit dem Poly(vinylaromat)block verträglichen Harzes, ausgewählt unter Cumaron-Indenharz, Poly(phenylenether)harz, Poly(styrol)harz, Poly(alfamethylstyrol)harz, Vinyltoluol-alfa-Methylstyrol-Copolymerharz, Poly(inden)harz und Poly(methylinden)harz.

17. Blockcopolymerzusammensetzungen nach Anspruch 16, dadurch gekennzeichnet, daß die ursprüngliche ethylenische Unsättigung in den Poly(konjugiertes Dien)blöcken selektiv hydriert worden ist.

18. Blockcopolymerzusammensetzungen nach den Ansprüchen 16 und 17, dadurch gekennzeichnet, daß sie modifizierte Blockcopolymere umfassen, die durch Aufpfropfen von ungesättigten Carbonsäuren, Estern oder Anhydriden hievon auf die Poly(konjugiertes Dien)blöcke erhältlich sind.

19. Blockcopolymerzusammensetzungen nach den Ansprüchen 16 bis 18, dadurch gekennzeichnet, daß die Poly(vinylaromat)blöcke der Blockcopolymere von reinem Styrol abgeleitet worden sind und scheinbare Molekulargewichte im Bereich von 5.000 bis 20.000 aufweisen und daß die inneren Poly(konjugiertes Dien)blöcke von reinem Butadien oder Isopren abgeleitet worden sind und scheinbare Molekulargewichte im Bereich von 30.000 bis 100.000 aufweisen.

20. Blockcopolymerzusammensetzungen nach den Ansprüchen 16 bis 19, dadurch gekennzeichnet, daß die Poly(konjugiertes Dien)blöcke 5 bis 50 % Vinylgruppen, bezogen auf die konjugierten Dienmoleküle, enthalten.

21. Blockcopolymerzusammensetzungen nach den Ansprüchen 16 bis 20, dadurch gekennzeichnet, daß die vollständigen Blockcopolymere einen Gehalt an gebundener Vinylaromatverbindung in einer Menge von 20 bis 60 Gew.-% aufweisen.

## Revendications

1. Tapis aisément et totalement recyclables, qui comprennent un tissu pour tapis thermoplastique en fils de polypropylène, de polyester ou de polyamide et une composition de copolymère séquencé, que l'on applique au côté dorsal ou dos du tissu du tapis, ladite composition de copolymère séquencé comprenant au moins :
a) un copolymère séquencé, contenant au moins deux séquences poly(vinyle aromatiques) terminales et au moins une séquence de poly(diène conjugué) interne,
b) une huile plastifiante non aromatique, en une proportion de 30 à 250 parties en poids par 100 parties en poids de copolymère séquencé,
c) une résine compatible avec la séquence poly(vinyle aromatique), choisie parmi une résine de coumarone-indène, une résine de poly(éther de phénylène), une résine de poly(styrène), une résine de poly(alpha-méthylstyrène), une résine d'un copolymère de vinyltoluène et d'alpha-méthylstyrène, une résine de poly(indène) et une résine de poly-méthylindéne), en une proportion de 30 à 200 parties en poids par 100 parties en poids de copolymère séquencé,
et possédant une viscosité à l'état fondu inférieure à 500 Pa.s aux températures de traitement qui varient de 150 à 200°C.

2. Tapis recyclables suivant la revendication 1, caractérisés en ce que l'insaturation éthylénique d'origine dans les séquences de poly(diène conjugué) a été sélectivement hydrogénée.

3. Tapis recyclables suivant la revendication 1, caractérisés en ce qu'une composition de copolymère séquencé a été appliquée sur le côté dorsal du tapis en une quantité de 100 à 1600 g/m².

4. Tapis recyclables suivant la revendication 3, caractérisés en ce qu'une composition de copolymère séquencé a été appliquée sur le côté dorsal du tapis en une quantité de 200 à 1000 g/m².

5. Tapis recyclables suivant l'une quelconque des revendications 1 à 4, caractérisés en ce que, à titre d'ingrédient du type copolymère séquencé (a), on utilise des copolymères triséquencés linéaires ou des copolymères séquencés en forme d'étoile ou radiaux, multibras, dont les séquences dérivent de manière prédominante du styrène pur et du butadiène et/ou de l'isoprène purs respectivement.

6. Tapis recyclables suivant l'une quelconque des revendications 1 à 5, caractérisés en ce que l'ingrédient du type copolymère séquence (a) est constitué de copolymères séquencés sélectivement hydrogénés, obtenus par le greffage d'acides carboxyliques insaturés ou de leurs esters ou anhydrides sur les séquences de poly(diène conjugué).

7. Tapis recyclables suivant l'une quelconque des revendications 1 à 6, caractérisés en ce que l'on utilise une huile paraffinique dans la composition de copolymère séquencé.

8. Tapis recyclables suivant l'une quelconque des revendications 1 à 6, caractérisés en ce que l'on utilise des oligomères d'oléfines, ou des polymères d'oléfines de faibles poids moléculaires dans la composition de copolymère séquencé.

9. Tapis recyclages suivant l'une quelconque des revendications 1 à 8, caractérisés en ce que, à titre de composant (c), on utilise une résine de poly(alpha-méthylstyrène).

10. Tapis recyclables suivant l'une quelconque des revendications 1 à 9, caractérisés en ce que le rapport pondéral entre les composants a), b) et c) de la composition de copolymère séquencé varie de 30 à 180 parties en poids de composant b) par 100 parties en poids de copolymère séquencé et de 50 à 160 parties en poids de composant c) par 100 parties en poids de copolymère séquencé.

11. Tapis recyclables suivant l'une quelconque des revendications 1 à 10, caractérisés en ce qu'ils dérivent de compositions thermofusibles possédant une viscosité à l'état fondu de 0,5 à 100 Pa.s à des températures de traitement qui varient de 150 à 200°C.

12. Tapis recyclables suivant l'une quelconque des revendications 1 à 11, caractérisés en ce qu'ils dérivent d'une composition de copolymère séquencé se présentant sous la forme d'une poudre fine que l'on fait fondre, après son application, en une couche continue par un traitement thermique.

13. Tapis recyclables suivant l'une quelconque des revendications 1 à 12, caractérisés en ce que du carbonate de calcium a été incorporé à titre de charge dans la composition de copolymère séquence appliquée.

14. Tapis recyclables suivant l'une quelconque des revendications 1 à 13, caractérisés en ce que la couche dorsale constitutive du dossier possède une épaisseur de 0,5 à 5 mm et une dureté de 40 à 60 shore A.

15. Tapis recyclables suivant l'une quelconque des revendications 1 à 14, caractérisés en ce qu'ils ont été déchiquetés.

16. Composition de copolymères séquencés à utiliser pour la garniture dorsale de tapis aisément et totalement recyclables, qui comprend :
a) 100 parties en poids d'un copolymère séquencé contenant au moins deux séquences poly(vinyle aromatiques) terminales et au moins une séquence de poly(diène conjugué) interne,
b) 30 à 180 parties en poids d'une huile plastifiante non aromatique,
c) 50 à 160 parties en poids d'une résine compatible avec la séquence poly(vinyle aromatique) choisie parmi une résine de coumarone-indène, une résine de poly(éther de phénylène), des résines de poly(styrène), une résine de poly(alpha-méthystyrène), une résine de copolymère de vinyltoluène et d'alpha-méthylstyrène, une résine de poly(indène) et une résine poly(méthylindène).

17. Compositions de copolymères séquencés suivant la revendication 16, caractérisées en ce que l'insaturation éthylénique d'origine dans les séquences de poly(diène conjugué) a été sélectivement hydrogénée.

18. Compositions de copolymères séquencés suivant les revendications 16 et 17, caractérisées en ce que qu'elles comprennent des copolymères séquencés modifiés que l'on peut obtenir par greffage d'acides carboxyliques insaturés ou de leurs esters ou de leurs anhydrides sur les séquences de poly(diène conjugué).

19. Compositions de copolymères séquencés suivant les revendications 16 à 18, caractérisées en ce que les séquences poly(vinyle aromatiques) des copolymères séquencés dérivent du styrène pur et possèdent des poids moléculaires apparents qui varient de 5000 à 20 000 et les séquences de poly(diène conjugué) internes dérivent du butadiène ou de l'isoprène pur et possèdent des poids moléculaires apparents qui varient de 30 000 à 100 000.

20. Compositions de copolymères séquencés suivant les revendications 16 à 19, caractérisées en ce que les séquences de poly(diène conjugué) contiennent de 5 à 50% de radicaux vinyle, par rapport aux molécules de diène conjugué.

21. Compositions de copolymères séquencés suivant les revendications 16 à 20, caractérisées en ce que les copolymères séquencés complets contiennent un composé vinyle aromatique lié en une proportion de 20 à 60% en poids.
